# FASCICULE DE BREVET EUROPEEN

(11) **EP 1 846 219 B1**
(45) Date de publication et mention de la délivrance du brevet: **13.05.2009**
(21) Numéro de dépôt: 06709259.3
(22) Date de dépôt: 06.02.2006
(51) Int. Cl.: B29C 49/56

(54) **PROCEDE DE COMMANDE D'OUVERTURE ET DE FERMETURE D'UN MOULE DE SOUFFLAGE ET DISPOSITIF DE SOUFFLAGE AGENCE POUR SA MISE EN OEUVRE**
VERFAHREN ZUM STEUERN DES ÖFFNENS UND SCHLIESSENS EINER BLASFORM UND BLASVORRICHTUNG ZUR ENTSPRECHENDEN DURCHFÜHRUNG
METHOD OF CONTROLLING THE OPENING AND CLOSING OF A BLOW MOULD AND BLOWING DEVICE FOR IMPLEMENTING SAME

(30) Priorité: 08.02.2005 FR 0501269
(43) Date de publication de la demande: 24.10.2007
(60) Demande divisionnaire: 08102501.7
(73) Titulaire: SIDEL PARTICIPATIONS, 76930 Octeville sur Mer (FR)
(72) Inventeur: LEGALLAIS, Stéphane c/o Sidel, F-76930 Octeville sur Mer (FR)
(74) Mandataire: Cabinet Plasseraud
(86) Numéro de dépôt international: PCT/FR2006/000270
(87) Numéro de publication internationale: WO 2006/084983

(56) Documents cités:
- WO-A-01/85435
- DE-A1- 19 948 474
- US-A- 4 313 720

## Description

La présente invention concerne des perfectionnements apportés dans le domaine du moulage de récipients en matière thermoplastique, notamment en PET, par soufflage ou étirage-soufflage d'ébauches chauffées dans un dispositif de moulage comportant au moins un moule de soufflage du type moule portefeuille avec au moins deux demi-moules écartables l'un de l'autre par rotation autour d'un axe commun d'articulation sous l'action de moyens d'entraînement.

Dans les dispositifs de moulage actuellement utilisés, les deux demi-moules s'ouvrent sensiblement symétriquement de part et d'autre du plan de joint, solution qui, sur le plan technologique, est facile à mettre en oeuvre. De leur côté, des moyens d'introduction ou de chargement destinés à introduire une ébauche dans le moule et des moyens d'extraction destinés à extraire un récipient moulé hors du moule sont agencés de manière que le déplacement de la pince de préhension, dans les deux cas, s'effectue approximativement dans le plan de joint du moule dans le moule ou au voisinage immédiat de celui-ci.

Au surplus, il est courant que le dispositif de moulage soit agencé sous forme d'un dispositif rotatif du type carrousel, en général équipé d'une pluralité de moules répartis sur sa périphérie, les plans de joint de ces moules étant sensiblement radiaux. De leur côté, les moyens d'introduction et les moyens d'extraction sont agencés sous forme de roues de transfert rotatives munies de pinces de préhension supportées par des bras approximativement radiaux. Le délai nécessaire aux moyens d'introduction pour introduire.radialement l'ébauche dans le moule ou aux moyens d'extraction pour extraire radialement le récipient hors du moule nécessité que chaque pince de préhension accompagne le moule sur une portion de la trajectoire rotative de celui-ci, avec en complément un mouvement à composante radiale de la pince de préhension pour pénétrer dans le moule, respectivement sortir du moule, ces déplacements devant se dérouler sans interférence physique entre les bords des demi-moules et les pinces de préhension, l'ébauche ou respectivement le récipient.

Il en résulte un agencement relativement complexe des moyens d'introduction et des moyens d'extraction qui se présentent sous forme de roues de transfert équipées de bras de support des pinces de préhension qui sont animés d'un double mouvement de pivotement et radial, alors que les pinces de préhension peuvent de leur côté être animées d'un mouvement de pivotement sur l'extrémité de leur bras de support. Ces mouvements combinés sont obtenus mécaniquement par des ensembles complexes de galets coopérant avec des cames fixes, qui conduisent à un encombrement important de l'environnement du carrousel rotatif. De plus, ces ensembles sont le siège de frottements mécaniques importants ainsi que de phénomènes de rebondissements, qui limitent la vitesse de fonctionnement des installations.

Récemment, des structures simplifiées ont été proposées, qui font appel à un agencement de bras de support et de pince d'un seul tenant et animé d'un unique mouvement de pivotement, ce qui conduit à une simplification considérable des commandes et à un désencombrement notable des abords du carrousel tournant, tout en autorisant des vitesses de fonctionnement sensiblement accrues. Toutefois, cette simplification n'a pu être obtenue qu'au prix d'un mésalignement certes faible, mais cependant bien réel de l'axe de l'ébauche ou du récipient et du plan de joint du moule en début d'introduction, respectivement en fin d'extraction. Autrement dit, les mouvements de la pince de préhension lors de l'introduction de l'ébauche et lors de l'extraction du récipient s'effectuent maintenant selon des arcs de cercle, et non plus de façon strictement radiale. Il peut en résulter, au moins dans certaines configurations de mise en oeuvre, le risque d'une interférence physique entre le bord d'un des demi-moules et la pince de préhension et/ou l'ébauche, respectivement le récipient.

Certes, une solution aurait pu consister à augmenter l'angle d'ouverture des moules par rapport à ce qui est pratiqué. Toutefois, une telle solution ne peut pas donner satisfaction pour au moins deux raisons.

Une première raison réside dans le fait qu'ouvrir un moule d'un angle accru entraîne une augmentation du temps nécessaire pour les étapes d'ouverture et de fermeture du moule, ce qui va à l'encontre des exigences actuelles des utilisateurs qui requièrent des temps toujours plus réduits afin d'augmenter les cadences.

Une autre raison réside dans le fait qu'un angle accru d'ouverture des moules nécessite une place disponible plus grande et donc un écartement plus grand des moules répartis sur la périphérie du carrousel. Cela ne pourrait être obtenu qu'en augmentant le diamètre du carrousel, et donc son inertie, ce qui, là encore, irait à l'encontre des exigences actuelles des utilisateurs qui requièrent des machines toujours moins encombrantes et des cadences toujours plus élevées. En outre, un carrousel de plus grand diamètre serait plus coûteux.

Le document US 4 313 720 montre, à sa figure 1, un agencement de machine tournante équipée de moules de soufflage du type moules portefeuilles à ouverture asymétrique par rapport au plan de joint dirigé sensiblement radialement.

La présente invention a pour but de proposer des solutions propres à éviter de telles interférences physiques, tout en faisant appel à des structures simples, peu complexes à mettre en oeuvre, et donc sensiblement peu onéreuses, capables d'autoriser une augmentation des cadences de fonctionnement.

A ces fins, selon un premier de ses aspects, l'invention propose un procédé de commande d'ouverture et de fermeture d'un moule de soufflage du type moule portefeuille pour la fabrication de récipients en matière thermoplastique, notamment en PET, par soufflage ou étirage-soufflage d'ébauches chauffées, tel que mentionné dans le préambule de la revendication 1, lequel procédé se caractérise selon l'invention par les dispositions énoncées dans la partie caractérisante de la revendication 1.

Grâce à cette disposition, le demi-moule le plus ouvert laisse un passage plus important pour l'introduction d'un organe auxiliaire, tel qu'une pince de préhension, dans le moule, alors que, comme cela apparaîtra clairement plus loin, les moyens de réalisation sont simples. Autrement dit, la solution proposée par l'invention consiste à faire pivoter le plan de symétrie du moule de manière qu'il accompagne, autant que faire se peut, les moyens associés au moule pour amener l'ébauche ou emmener le récipient moulé de manière que ceux-ci se déplacent approximativement selon ce plan de symétrie, et non plus selon le plan de joint du moule qui, dans cette configuration, ne coïncide plus avec le plan de symétrie sauf dans la position de fermeture du moule.

On soulignera que, dans le contexte de l'invention, il est possible de conserver l'angle d'ouverture habituel du moule, autrement dit d'une part de ne pas modifier le temps nécessaire aux opérations d'ouverture et de fermeture du moule de sorte que la cadence de fonctionnement n'est pas affectée défavorablement et d'autre part de ne pas modifier l'encombrement nécessité par l'ouverture, puisqu'en fait un demi-moule se trouve davantage déplacé et l'autre moins que dans le cas des solutions connues jusqu'alors. Par ailleurs, la possibilité qui est offerte de mettre en oeuvre des moyens de déplacement des ébauches/récipients d'un type simplifié en combinaison avec le processus d'ouverture asymétrique du moule autorise un accroissement des cadences.

Au surplus, la solution proposée selon l'invention s'avère remarquablement intéressante par le fait que l'on conserve en partie les moyens d'entraînement prévus dans les dispositifs de moulage actuels, que les moules ne sont pas affectés par la mise en oeuvre de ces solutions, et qu'en définitive les modifications à apporter aux dispositifs de moulage actuels sont relativement restreintes.

De façon pratique, les dispositions conformes à l'invention sont appelées à trouver des conditions optimales de mise en oeuvre dans le cas où le moule appartient à un dispositif de moulage rotatif du type carrousel et où le plan de joint du moule s'étend sensiblement selon un rayon du dispositif de moulage. En particulier dans ce cas, en vue d'une mise en oeuvre dans les machines actuelles de la Demanderesse eu égard aux agencements respectifs des moules et des moyens d'introduction des ébauches et des moyens d'extraction des récipients moulés, il devient intéressant que, par exemple pour l'introduction de l'ébauche dans le moule, ce soit le demi-moule arrière (considéré dans le sens de rotation du dispositif de moulage) qui ait une amplitude angulaire d'ouverture supérieure à celle du demi-moule avant ; de même que, par exemple pour l'extraction du récipient moulé, ce soit le demi-moule avant (considéré dans le sens de rotation du dispositif de moulage) qui ait une amplitude angulaire d'ouverture supérieure à celle du demi-moule arrière.

Selon un second de ses aspects, l'invention propose un dispositif de moulage pour la fabrication de récipients en matière thermoplastique, notamment en PET, par soufflage ou étirage-soufflage d'ébauches chauffées, tel que mentionné dans le préambule de la revendication 4, lequel dispositif de moulage se caractérise, étant agencé conformément à l'invention, par les dispositions énoncées dans la partie caractérisante de la revendication 4.

Dans un mode de réalisation concret, on peut prévoir que les moyens d'entraînement comprennent un bras d'entraînement d'étendue approximativement perpendiculaire au plan de joint et que ce bras d'entraînement possède une première extrémité articulée sur un axe fixe et une seconde extrémité opposée articulée sur ledit axe commun des susdites bielles.

Les dispositions conformes à l'invention peuvent trouver une application particulièrement intéressante dans un dispositif de moulage constitué sous forme d'un dispositif rotatif du type carrousel, le plan de joint du moule s'étendant sensiblement radialement. Dans ce cas, pour l'équipement de la plupart des dispositifs de moulage de la Demanderesse, il est avantageux, pour l'introduction d'une ébauche dans le moule, que ce soit le demi-moule arrière (considéré dans le sens de rotation du carrousel) qui ait un angle d'ouverture, par rapport au plan de joint, qui soit supérieur à celui de l'autre demi-moule ; de même il est alors avantageux, pour l'extraction d'un récipient moulé hors du moule, que ce soit le demi-moule avant (considéré dans le sens de déplacement du carrousel) qui ait un angle d'ouverture, par rapport au plan de joint, qui soit supérieur à celui de l'autre demi-moule.

L'invention sera mieux comprise à la lecture de la description détaillée qui suit de certains modes de réalisations préférés donnés uniquement à titre d'exemples nullement limitatifs. Dans cette description, on se réfère aux dessins annexés sur lesquels :
- la figure 1A est une représentation très schématique, en vue de dessus, d'un mode de réalisation d'un dispositif de moulage, qui ne fait pas partie de la présente invention;
- les figures 1B et 1C sont des représentations analogues à celle de la figure 1A montrant le moule, dans le cas où il appartient à un dispositif rotatif du type carrousel, dans deux positions fonctionnelles différentes ;
- la figure 2A est une représentation très schématique, en vue de dessus, d'un mode de réalisation d'un dispositif de moulage agencé conformément à l'invention ;
- les figures 2B et 2C sont des représentations analogues à celle de la figure 2A montrant le moule, dans le cas où il appartient à un dispositif rotatif du type carrousel, dans deux positions fonctionnelles différentes ;
- la figure 3A est une représentation très schématique, en vue de dessus, d'un mode de réalisation d'un dispositif de moulage, qui ne fait pas partie de la présente invention; et
- les figures 3B et 3C sont des représentations analogues à celle de la figure 3A montrant le moule, dans le cas où il appartient à un dispositif rotatif du type carrousel, dans deux positions fonctionnelles différentes.

Dans les dessins annexés, le dispositif de moulage est représenté de façon très schématique et seules les parties ou éléments utiles à la compréhension de l'invention sont illustrés, étant entendu que le dispositif de moulage peut avoir toute conformation compatible avec les dispositions proposées dans le cadre de l'invention.

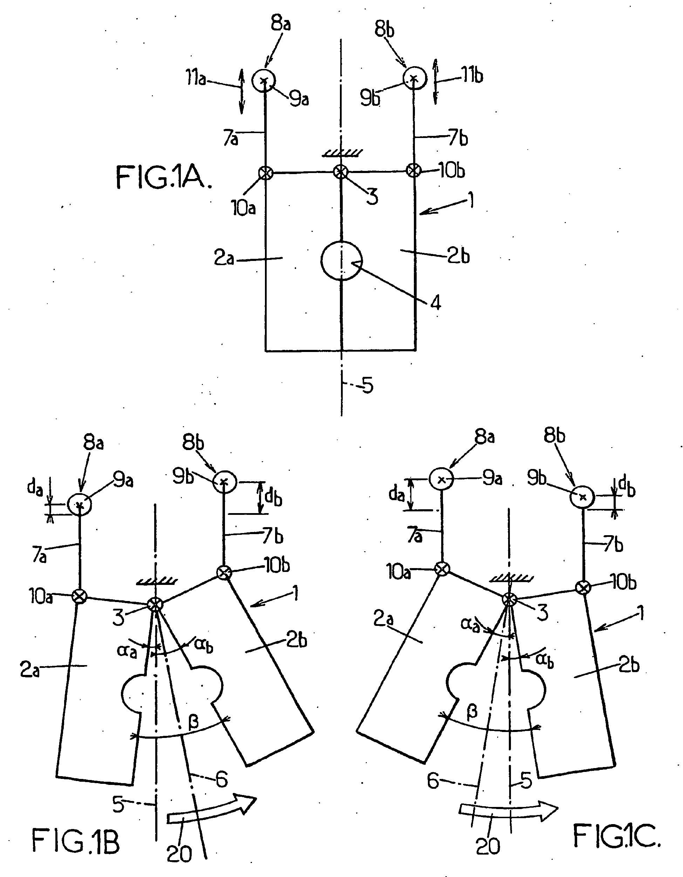

La commande d'ouverture et de fermeture d'un moule de soufflage, montré en vue de dessus en position de fermeture et désigné dans son ensemble par la référence 1, du type moule portefeuille, destiné à la fabrication de récipients en matière thermoplastique, notamment en PBT, par un processus de soufflage ou d'étirage-soufflage d'ébauches chauffées est illustrée à la figure 1A. Un tel moule 1 comporte au moins deux demi-moules 2a, 2b qui sont écartables angulairement l'un de l'autre par rotation autour d'un axe 3 commun fixe d'articulation. Les demi-moules comportent des empreintes creuses respectives qui, ensemble, définissent une cavité 4 (dont seule l'ouverture supérieure est visible sur la figure 1A) de moulage des récipients ou du corps des récipients (dans ce cas, le moule comporte en outre une troisième partie ou fond de moule comportant une empreinte creuse correspondant au fond du récipient à fabriquer).

Dans la positon de fermeture représentée à la figure 1A, les faces accolées des deux demi-moules 2a, 2b définissant un plan de joint 5 qui est matérialisé par un trait mixte.

Des moyens d'actionnement, qui en général font intervenir des bielles accouplées respectivement aux deux demi-moules, permettent de déplacer les demi-moules entre leur position de fermeture et leur position d'ouverture et de les maintenir dans ces positions. Des moyens de commande, en général sous forme de galets et de cames, permettent de commander ces moyens d'actionnement en fonction des séquences de fonctionnement. Des exemples concrets en seront donnés plus loin en relation avec certains modes de réalisation préférés de l'invention.

Dans une configuration traditionnelle de moule du type précité, les demi-moules occupent des positions symétriques par rapport au plan de joint, quelle que .soit leur position fonctionnelle ; autrement dit, ils sont déplacés symétriquement de part et d'autre du plan de joint.

Pour faciliter l'introduction des ébauches de récipient (notamment des préformes) lors du chargement des moules et l'extraction des récipients terminés lors du déchargement des moules, en particulier à l'aide de bras de transfert de conception simplifiée qui possèdent moins de degrés de liberté que les bras utilisés jusqu'à présent (et dont notamment les pinces terminales ne se déplacent pas strictement dans l'axe du plan de joint entre les deux demi-moules), mais qui en revanche sont plus simples à commander et moins coûteux, l'invention propose, comme illustré à la figure 1B, que les deux demi-moules 2a, 2b soient ouverts de façon asymétrique de part et d'autre du plan de joint 5, ce grâce à quoi le demi-moule le plus ouvert laisse, par rapport au plan de joint 5, un passage plus important pour l'introduction d'un organe auxiliaire, tel qu'un bras de préhension, dans le moulé. Ainsi, dans l'exemple de la figure 1B, l'angle α_{b} d'ouverture du demi-moule 2b par rapport au plan de joint 5 est supérieur à l'angle αₐ d'ouverture du demi-moule 2a par rapport au plan de joint, tandis que c'est l'inverse dans l'exemple de la figure 1C.

Cependant il est souhaitable de conserver le même angle β d'ouverture mutuelle des deux demi-moules 2a, 2b que dans les moules actuels, de sorte que la solution proposée par l'invention est équivalente à un pivotement du plan bissecteur 6 (schématisé par un trait mixte à double point sur la figure 1B) des deux demi-moules 2a, 2b. Cette disposition permet de conserver les mêmes paramètres, et notamment le même temps, de commande d'ouverture et de fermeture du moule qu'actuellement, de sorte que les conditions de fonctionnement du moule ne sont pas modifiées par la mise en oeuvre des dispositions de l'invention.

Différentes solutions techniques sont envisageables pour provoquer le déplacement asymétrique souhaité des deux demi-moules. Toutes les solutions proposées ci-après font appel à des moyens d'actionnement des demi-moules qui font intervenir deux bielles accouplées respectivement aux deux demi-moules.

Un mode de réalisation, qui ne fait pas partie de la présente invention, illustré à la figure 1A met en oeuvre deux bielles 7a, 7b, indépendantes l'une de l'autre, accouplées, à une de leur extrémité, respectivement aux deux demi-moules 2a, 2b par deux liaisons 10a, 10b articulées respectives et, à leur autre extrémité, à des commandes 8a, 8b individuelles respectives. Ces commandes peuvent être constituées, par exemple, par des galets respectifs 9a, 9b qui sont montés fous aux extrémités respectives des bielles 7a, 7b et qui coopèrent avec des cames respectives (non montrées) mobiles si le dispositif de moulage est fixe ou fixes si le dispositif de moulage est mobile. Les bielles 7a, 7b peuvent par exemple s'étendre approximativement parallèlement l'une à l'autre et au plan de joint 5 et les commandes 8a, 8b sont agencées pour déplacer les bielles 7a, 7b longitudinalement (flèches 11a, 11b respectivement).

Le mode de réalisation qui vient d'être décrit est celui qui offre le plus de facilités pour n'importe quel actionnement souhaité des deux demi-moules 2a, 2b à la fois en temps et en amplitude angulaire.

Ainsi, à la figure 1B est illustrée une configuration de commande provoquant une ouverture du demi-moule 2b d'un angle, mesuré par rapport au plan de joint 5, qui est supérieur à l'angle d'ouverture du demi-moule 2a par rapport à ce plan de joint 5, en raison d'une excursion d_{b} de la commande 8b qui est plus longue que l'excursion dₐ de la commande 8a.

De même, à la figure. 1C est illustrée une configuration de commande provoquant une ouverture du demi-moule 2a d'un angle, mesuré par rapport au plan de joint 5, qui est supérieur à l'angle d'ouverture du demi-moule 2b par rapport à ce plan de joint 5, en raison d'une excursion d_{b} de la commande 8b qui est plus courte que l'excursion dₐ de la commande 8a.

Cependant, malgré les avantages procurés par la solution technique qui vient d'être exposée en terme de facilités de commande, cette solution implique un doublement des moyens de commande qui nécessite du matériel et est donc onéreuse ; cette solution conduit aussi à un encombrement accru en raison même du doublement des moyens de commande (et particulier des cames de guidage des galets).

Dans ces conditions, le mode de réalisation selon l'invention peut être préféré en raison des économies de matériels et de place qu'il procure. Dans cette configuration, on fait appel à deux bielles 7a, 7b qui sont accouplées l'une à l'autre de façon articulée en 12 à leur extrémité libre, selon une disposition classique dans ce type de dispositif. A cette différence près qu'ici l'une des bielles (en l'occurrence la bielle 7b) est réalisée plus courte que l'autre (ici la bielle 7a).

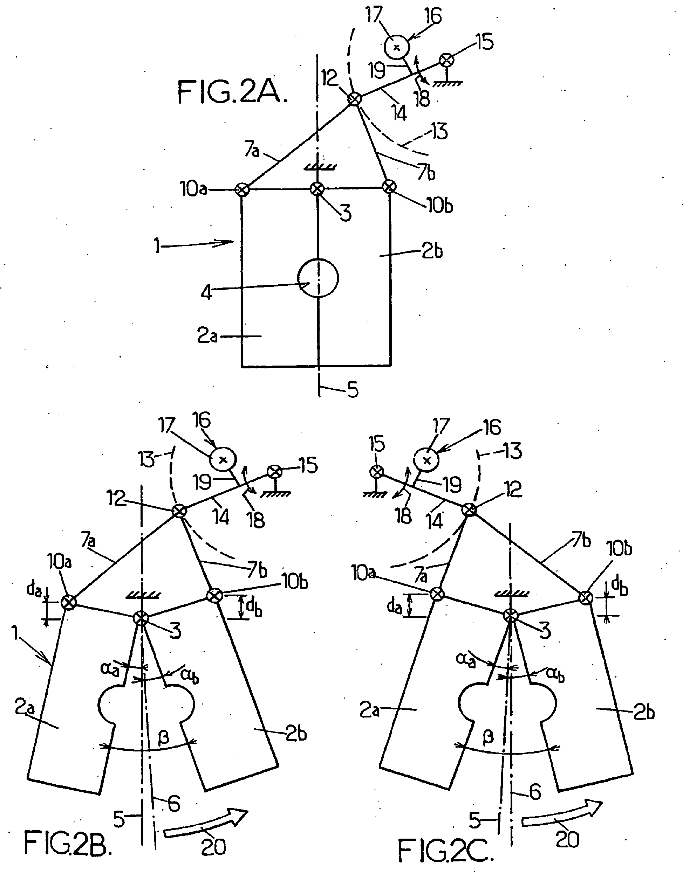

Au surplus, la trajectoire (désignée par la référence 13) de l'axe 12 commun est extérieure au plan de joint, de sorte que le demi-moule 2b (sur la figure 2B) entraîné par la bielle 7b la plus courte possède un angle d'ouverture α_{b}, par rapport au plan de joint 5, qui est supérieur à celui αₐ de l'autre demi-moule 2a comme montré à la figure 2B.

Dans cette configuration, des moyens d'entraînement dudit axe 12 commun sont propres à déplacer ce dernier sur une trajectoire 13 s'étendant approximativement parallèlement au plan de joint 5, comme représenté à la figure 2B ; la trajectoire 13 de l'axe 12 commun est extérieure au plan de joint 5, le demi-moule 2b entraîné par la bielle 7b la plus courte ayant un angle d'ouverture α_{b}, par rapport au plan de joint, qui est supérieur à celui αₐ de l'autre demi-moule 2a. De préférence, les moyens d'entraînement comprennent un bras 14 d'entraînement d'étendue approximativement transversale au plan de joint 5 et ce bras 14 d'entraînement possède une première extrémité articulée sur un axe 15 fixe et une seconde extrémité opposée articulée sur ledit axe 12 commun des susdites bielles 7a, 7b, de sorte que la trajectoire 13 de l'axe 12 est un arc de cercle qui s'étend, globalement, approximativement parallèlement au plan de joint 5.

Pour ce qui concerne les moyens de commande 16 pour permettre le déplacement en rotation du bras 14, il peut s'agir par exemple d'un galet 17 supporté par un bras 19 secondaire solidaire du bras 14 et propre à coopérer avec une came (non représentée) pour provoquer un déplacement (flèche 18) en rotation du bras 14 autour de l'axe 15.

Dans l'agencement proposé avec deux bielles 7a, 7b de longueurs inégales, le déplacement de l'axe 12 commun sur la trajectoire 13 provoque des rotations des deux demi-moules 2a, 2b respectivement qui sont simultanées, mais d'amplitudes angulaires différentes : le déplacement angulaire du demi-moule accouplé à la bielle la plus courte est supérieure au déplacement angulaire du demi-moule accouplé à la bielle la plus longue. Dans l'exemple de la figure 2B, l'amplitude angulaire α_{b} du déplacement curviligne du demi-moule 2b accouplé à la bielle 7b 1a plus courte est supérieure à celle αₐ du demi-moule 2a accouplé à la bielle 7a la plus longue.

Dans le cas ou, inversement, on souhaite que ce soit le demi-moule 2a qui présente un déplacement angulaire αₐ supérieur à celui α_{b} du demi-moule 2b, il suffit, comme illustré à la figure 2C, d'inverser la position du bras 14 d'entraînement, de la bielle la plus courte qui devient la bielle 7a, ainsi que la position de la trajectoire 13 de l'axe 12 par rapport au plan de joint 5.

On soulignera que, dans ce mode de réalisation, les agencements du moule, du bras d'actionnement 14 et des moyens de commande 16 demeurent approximativement identiques à ce qu'ils sont dans la configuration classique actuelle, et que l'aménagement apporte par l'invention porte sur le raccourcissement de l'une des deux bielles.

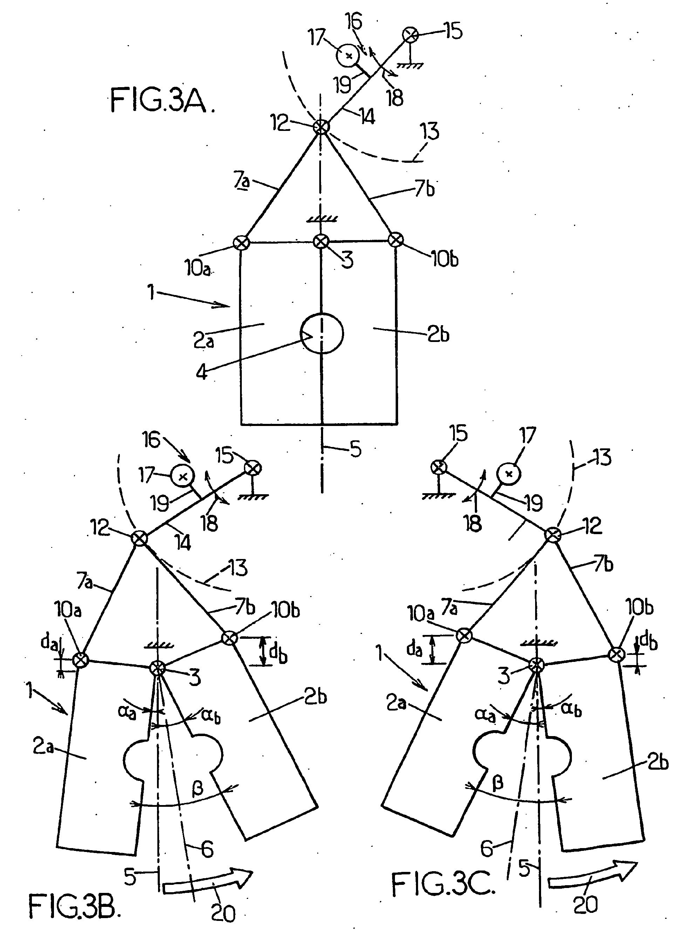

Un mode de réalisation, qui ne fait pas partie de la présente invention, illustré à la figure 3A, consiste à mettre en oeuvre deux bielles 2a, 2b qui sont de même longueur et qui sont accouplées l'une à l'autre de façon articulée sur un axe 12 à leur extrémité libre, selon une disposition classique dans ce type de dispositif.

Au surplus, la trajectoire (désignée par la référence 13) de l'axe 12 commun est transversale au plan de joint. Autrement dit, l'axe 12 commun est déplaçable selon une direction inclinée par rapport au plan de joint, la valeur de cette inclinaison étant en relation avec l'asymétrie d'ouverture des deux demi-moules 2a, 2b de part et d'autre du plan de joint 5. Ainsi, lorsque l'axe 12 commun aux deux bielles 2a, 2b est déplacé sur sa trajectoire 13 vers la gauche sur la figure 3B, le demi-moule 2b est entraîné par la bielle 7b avec un angle d'ouverture α_{b}, par rapport au plan de j joint 5, qui est supérieur à celui αₐ de l'autre demi-moule 2a.

Dans cette configuration, des moyens d'entraînement dudit axe 12 commun sont propres à déplacer ce dernier sur une trajectoire 13 s'étendant transversalement au plan de joint 5, comme représenté à la figure 3B ; la trajectoire 13 de l'axe 12 commun intersecte le plan de joint 5. De préférence, les moyens d'entraînement comprennent un bras d'entraînement 14 d'étendue approximativement transversale au plan de joint 5 et ce bras d'entraînement 14 possède une première extrémité articulée sur un axe 15 fixe et une seconde extrémité opposée articulée sur ledit axe commun 12 des susdites bielles 7a, 7b, de sorte que la trajectoire 13 de l'axe 12 est un arc de cercle qui intersecte le plan de joint 5.

Pour ce qui concerne les moyens de commande 16 pour le déplacement en rotation du bras 14, il peut s'agir par exemple, là encore, d'un galet 17 supporté par un bras 19 secondaire solidaire du bras 14 et propre à coopérer avec une came (non représentée) pour provoquer un déplacement (flèche 18) en rotation du bras 14 autour de l'axe 15.

Dans le cas où, inversement, on souhaite que ce soit le demi-moule 2a qui présente un déplacement angulaire αₐ supérieur à celui α_{b} du demi-moule 2b, il suffit, comme illustré à la figure 3C, d'inverser la position du bras 14 d'entraînement et la position de la trajectoire 13 de l'axe 12 par rapport au plan de joint 5.

On soulignera que, dans ce mode de réalisation, le moule et les bielles conservent leur structure classique actuelle et que l'aménagement apporté par l'invention concerne le bras 14 d'entraînement et les moyens de commande 16 de manière telle que la trajectoire 13 de l'axe 12 s'étende transversalement au plan de joint 5.

Quel que soit le mode de réalisation envisagé, les dispositions qui viennent d'être exposées en détail en regard des figures 1A-1C, 2A-2C et 3A-3C peuvent trouver une application tout particulièrement intéressante dans les dispositifs de moulage constitués sous forme de dispositifs rotatifs du type carrousel, qui regroupent plusieurs dispositifs de moulage répartis périphériquement sur une embase tournante. Des carrousels ainsi agencés sont bien connus dans l'état de la technique et il n'y a pas lieu de les décrire de façon détaillée ici. Les figures 1A-1C, 2A-2C et 3A-3C n'en montrent aucun élément structurel et seul est indiqué l'unique caractéristique utile dans le contexte de l'invention, à savoir le sens de rotation du carrousel schématisé par une flèche 20. On soulignera également qu'en général le plan de joint 5 de chaque moule 1 du carrousel s'étend sensiblement radialement (le centre de rotation du carrousel n'est pas montré sur les figures).

Dans ce contexte, on peut prévoir que c'est le demi-moule arrière (considéré dans le sens 20 de rotation du carrousel), à savoir le demi-moule 2a, qui a un angle d'ouverture αₐ, par rapport au plan de joint 5, qui est supérieur à celui α_{b} de l'autre demi-moule 2b. Cette configuration est montrée sur les figures 1C, 2C et 3C. Elle peut être utile notamment pour faciliter le chargement du moule avec une ébauche (telle qu'une préforme) à partir d'une roue de chargement équipée de bras mobiles de chargement, en particulier de bras à structure simplifiée dont la pince terminale de préhension peut ne pas être déplacée, au moins sur une partie de son parcours, de façon exactement radiale à l'intérieur du moule.

On peut aussi prévoir, à l'inverse, que c'est le demi-moule avant (considéré dans le sens 20 de rotation du carrousel), à savoir le demi-moule 2b, qui a un angle d'ouverture α_{b}, par rapport au plan de joint 5, qui est supérieur à celui αₐ de l'autre demi-moule 2a. Cette configuration est illustrée sur les figures 1B, 2B et 3B. Elle peut être utile notamment pour faciliter l'extraction d'un récipient achevé hors du moule, par exemple pour le saisir et le mouvoir à l'aide d'un bras de déchargement d'une roue de déchargement, en particulier à l'aide d'un bras à structure simplifiée dont la pince terminale de préhension peut ne pas être déplacée, au moins sur une partie de son parcours, de façon exactement radiale à l'intérieur du moule.

## Revendications

1. Procédé de commande d'ouverture et de fermeture d'un moule de soufflage du type moule portefeuille pour la fabrication de récipients en matière thermoplastique, notamment en PET, par soufflage ou étirage-soufflage d'ébauches chauffées, ledit moule (1) comportant au moins deux demi-moules (2a, 2b) écartables l'un de l'autre par rotation autour d'un axe (3) commun fixe d'articulation de façon asymétrique de part et d'autre de leur plan de joint (5), les deux demi-moules (2a, 2b) étant commandés de façon commune par l'intermédiaire de deux bielles (7a, 7b) respectives ayant des premières extrémités accouplées à rotation par les liaisons (10a, 10b) aux demi-moules (2a, 2b) respectifs et des secondes extrémités accouplées l'une à l'autre à rotation sur un axe (12) commun déplaçable approximativement parallèlement au plan de joint (5),
**caractérisé en ce que** les deux bielles (7a, 7b) ont des longueurs différentes, la différence de leurs longueurs étant en relation avec la différence des amplitudes (αₐ, α_{b}) d'ouverture asymétrique des deux demi-moules respectifs de part et d'autre du plan de joint (5), et **en ce que** l'axe (12) commun est déplacé selon une trajectoire (13) extérieurement au plan de joint (5).

2. Procédé selon la revendication 1, ledit moule (1) appartenant à un dispositif de moulage rotatif du type carrousel se déplaçant selon un sens (20) de rotation et le plan de joint (5) du moule s'étendant sensiblement selon un rayon du dispositif de moulage, **caractérisé en ce que** le demi-moule arrière (considéré dans le sens (20) de rotation du dispositif de moulage) a une amplitude angulaire d'ouverture, par rapport au plan de joint (5), qui est supérieure à celle du demi-moule avant.

3. Procédé selon la revendication 1, ledit moule (1) appartenant à un dispositif de moulage rotatif du type carrousel se déplaçant selon un sens (20) de rotation et le plan de joint (5) du moule s'étendant sensiblement selon un rayon du dispositif de moulage, **caractérisé en ce que** le demi-moule avant (considéré dans le sens (20) de rotation du dispositif de moulage) a une amplitude angulaire d'ouverture, par rapport au plan de joint, qui est supérieure à celle du demi-moule arrière.

4. Dispositif de moulage pour la fabrication de récipients en matière thermoplastique, notamment en PET, par soufflage ou étirage-soufflage d'ébauches chauffées, ledit dispositif de moulage comportant au moins un moule (1) de soufflage du type moule portefeuille avec au moins deux demi-moules (2a, 2b) écartables l'un de l'autre par rotation autour d'un axe (12) commun d'articulation sous l'action de moyens d'actionnement qui sont agencés de manière telle que les deux demi-moules possèdent des angles (αₐ, α_{b}) respectifs d'ouverture de part et d'autre du plan de joint (5) du moule (1) qui ne soient pas égaux, lesquels moyens d'actionnement comprennent deux bielles (7a, 7b) ayant des premières extrémités raccordées à rotation par des liaisons (10a, 10b) respectivement aux deux demi-moules (2a, 2b) et des secondes extrémités raccordées à rotation sur un axe (12) commun et des moyens de commande (16) propres à déplacer le dit axe (12) commun sur une trajectoire (13) s'étendant approximativement parallèlement au plan de joint (5), ledit dispositif de moulage étant agencé pour la mise en oeuvre du procédé selon l'une quelconque des revendications 1 à 3, **caractérisé en ce que** les deux bielles (7a, 7b) ont des longueurs différentes et **en ce que** la trajectoire (13) de l'axe (12) commun est extérieure au plan de joint (5), le demi-moule entraîné par la bielle la plus courte ayant un angle d'ouverture, par rapport au plan de joint (5), qui est supérieur à celui de l'autre demi-moule.

5. Dispositif de moulage selon la revendication 4, **caractérisé en ce que** les moyens de commande (16) comprennent un bras (14) d'entraînement d'étendue transversale au plan de joint (5) et **en ce que** ce bras (14) d'entraînement possède une première extrémité articulée sur un axe (15) fixe et une seconde extrémité opposée articulée sur ledit axe (12) commun des susdites bielles (7a, 7b).

6. Dispositif de moulage selon la revendication 4 ou 5, constitué sous forme d'un dispositif rotatif du type carrousel se déplaçant selon un sens (20) de rotation et le plan de joint (5) du moule (1) s'étendant sensiblement radialement, **caractérisé en ce que** c'est le demi-moule arrière, considéré dans le sens (20) de rotation du carrousel, qui a un angle d'ouverture, par rapport au plan de joint, qui est supérieur à celui de l'autre demi-moule.

7. Dispositif de moulage selon la revendication 4 ou 5, constitué sous forme d'un dispositif rotatif du type carrousel se déplaçant selon un sens (20) de rotation et le plan de joint (5) du moule (1) s'étendant sensiblement radialement, **caractérisé en ce que** c'est le demi-moule avant, considéré dans le sens (20) de rotation du carrousel, qui a un angle d'ouverture, par rapport au plan de joint, qui est supérieur à celui de l'autre demi-moule.

## Claims

1. A method for controlling the opening and closing of a blow-molding mold of the hinged mold type for the manufacture of thermoplastic containers, particularly PET containers, by blow-molding or stretch-blow-molding heated blanks, said mold (1) comprising at least two mold halves (2a, 2b) that can be moved aside from one another by rotation about a stationary common articulation axle (3) asymmetrically on each side of the parting plane (5) thereof, the two mold halves (2a, 2b) being controlled jointly by means of two respective link rods (7a, 7b) having first ends connected rotationally by the links (10a, 10b) to the respective mold halves (2a, 2b) and second ends connected rotationally to one another to a common axle (12) that is movable approximately parallel to the parting plane (5),
**characterized in that** the two link rods (7a, 7b) have lengths which are different, the difference in their lengths being related to the difference in the asymmetric angles (αₐ, α_{b}) of opening of the two respective mold halves on each side of the parting plane (5), and **in that** the common axle (12) moves along a path (13) external to the parting plane (5).

2. The method as claimed in claim 1, the mold (1) belonging to a rotary molding device of the carousel type moving in a rotation direction (20), and the parting plane (5) of the mold running substantially along a radius of the molding device, **characterized in that** the rear mold half (considered in the direction (20) in which the molding device rotates) has an angle of opening, with respect to the parting plane (5), which is greater than that of the front mold half.

3. The method as claimed claim 1, the mold (1) belonging to a rotary molding device of the carousel type having a rotation direction (20), and the parting plane (5) of the mold running substantially along a radius of the molding device, **characterized in that** the front mold half (considered in the direction (20) in which the molding device rotates) has an angle of opening, with respect to the parting plane, which is greater than that of the rear mold half.

4. A molding device for manufacturing thermoplastic containers, particularly PET containers, by blow-molding or stretch-blow-molding heated blanks, said molding device comprising at least one blow-molding mold (1) of the hinged mold type with at least two mold halves (2a, 2b) which can be moved aside from one another by rotation about a common articulation axle (12) due to actuating means which are designed in such a way that the two mold halves have respective angles (αₐ, α_{b}) of opening on each side of the parting plane (5) of the mold (1) which are not equal, which actuating means comprise two link rods (7a, 7b) having first ends rotationally connected by links (10a, 10b) respectively to the two mold halves (2a, 2b) and second ends rotationally connected at a common axle (12) and control means (16) adapted to move said common axle (12) along a path (13) running approximately parallel to the parting plane (5),said molding device being designed for implementing the method as claimed in any one of claims 1 to 3, **characterized in that** the two link rods (7a, 7b) have lengths which are different and **in that** the path (13) of the common axle (12) is external to the parting plane (5), the mold half driven by the shorter link rod having an angle of opening, with respect to the parting plane (5), which is larger than that of the other mold half.

5. The molding device as claimed in claim 4, **characterized in that** the control means (16) comprise a drive arm (14) running transversely to the parting plane (5) and **in that** this drive arm (14) has a first end articulated to a stationary axle (15) and an opposite second end articulated to said common axle (12) of said link rods (7a, 7b).

6. The molding device as claimed in claim 4 or 5, designed as a rotary device of the carousel type moving in a rotation direction (20) and the parting plane (5) of the mold (1) running substantially radially, **characterized in that** it is the rear mold half, considered in the direction (20) in which the carousel rotates, which has an angle of opening, with respect to the parting plane, which is greater than that of the other mold half.

7. The molding device as claimed in claim 4 or 5, designed as a rotary device of the carousel type moving in a rotation direction (20) and the parting plane (5) of the mold (1) running substantially radially, **characterized in that** it is the front mold half, considered in the direction (20) in which the carousel rotates, which has an angle of opening, with respect to the parting plane, which is greater than that of the other mold half.

## Patentansprüche

1. Verfahren zum Steuern des Öffnens und des Schließens einer Blasform des Klappformtyps zur Herstellung von Behältern aus Thermoplast, insbesondere aus PET, mittels Blasformen oder Streckblasen erhitzter Vorformlinge, wobei die genannte Form (1) mindestens zwei Formhälften (2a, 2b) umfasst, die mittels Drehung um eine gemeinsame feste Achse (3) asymmetrisch zu beiden Seiten ihrer Teilungsebene (5) voneinander entfernbar sind, wobei die zwei Formhälften (2a, 2b) gemeinsam mithilfe von zwei Stangen (7a, 7b) gesteuert werden, die jeweils erste Enden, die über die Verbindungen (10a, 10b) an den jeweiligen Formhälften (2a, 2b) angelenkt sind, und zweite Enden aufweisen, die auf einer gemeinsamen Achse (12) aneinander angelenkt sind, die ungefähr parallel zur Teilungsebene (5) verschiebbar ist,
**dadurch gekennzeichnet, dass** die zwei Stangen (7a, 7b) unterschiedliche Längen aufweisen, wobei der Unterschied zwischen ihren Längen im Verhältnis zum Unterschied der Amplituden (αₐ, α_{b}) des asymmetrischen Öffnens der jeweiligen zwei Formhälften zu beiden Seiten der Teilungsebene (5) steht und dass die gemeinsame Achse (12) auf einer Bahn (13) außerhalb der Teilungsebene (5) verschoben wird.

2. Verfahren nach Anspruch 1, wobei die Form (1), die zu einer Karusselldrehformvorrichtung gehört, sich entlang einer Drehrichtung (20) bewegt und die Teilungsebene (5) der Form sich im Wesentlichen entlang eines Radius der Formvorrichtung erstreckt, **dadurch gekennzeichnet, dass** die hintere Formhälfte (in Drehrichtung (20) der Formvorrichtung betrachtet) eine Amplitude des Öffnungswinkels im Verhältnis zur Teilungsebene (5) aufweist, die größer als die der vorderen Formhälfte ist.

3. Verfahren nach Anspruch 1, wobei die Form (1), die zu einer Karusselldrehformvorrichtung gehört, sich entlang einer Drehrichtung (20) bewegt und die Teilungsebene (5) der Form sich im Wesentlichen entlang eines Radius der Formvorrichtung erstreckt, **dadurch gekennzeichnet, dass** die vordere Formhälfte (in Drehrichtung (20) der Formvorrichtung betrachtet) eine Amplitude des Öffnungswinkels im Verhältnis zur Teilungsebene aufweist, die größer als die der hinteren Formhälfte ist.

4. Formvorrichtung zur Herstellung von Behältern aus Thermoplast, insbesondere aus PET, mittels Blasformen oder Streckblasen erhitzter Vorformlinge, wobei die genannte Formvorrichtung mindestens eine Blasform (1) des Klappformtyps umfasst, die mindestens zwei Formhälften (2a, 2b) umfasst, die mittels Drehung um eine gemeinsame Achse (12) unter Einwirkung von Betätigungsmitteln voneinander entfernbar sind, die derart eingerichtet sind, dass die zwei Formhälften jeweilige Winkel (αₐ, α_{b}) zur Öffnung zu beiden Seiten der Teilungsebene (5) der Form (1) aufweist, die nicht gleich sind, wobei die Betätigungsmittel zwei Stangen (7a, 7b) umfassen, die erste Enden, die über Verbindungen (10a, 10b) jeweils an den zwei Formhälften (2a, 2b) angelenkt sind, und zweite Enden, die auf einer gemeinsamen Achse (12) drehverbunden sind, und eigene Steuerungsmittel (16) zum Verschieben der genannten gemeinsamen Achse (12) auf einer Bahn (13) aufweisen, die sich ungefähr parallel zur Teilungsebene (5) erstreckt, wobei die genannte Formvorrichtung zur Durchführung des Verfahrens nach einem der Ansprüche 1 bis 3 eingerichtet ist,
**dadurch gekennzeichnet, dass** die zwei Stangen (7a, 7b) unterschiedliche Längen aufweisen und dass die Bahn (13) der gemeinsamen Achse (12) außerhalb der Teilungsebene (5) liegt, wobei die von der kürzeren Stange angetriebene Formhälfte einen Öffnungswinkel im Verhältnis zur Teilungsebene (5) aufweist, der größer als der der anderen Formhälfte ist.

5. Formvorrichtung nach Anspruch 4, **dadurch gekennzeichnet, dass** die Steuerungsmittel (16) einen Antriebsarm (14) umfassen, der sich quer zur Teilungsebene (5) erstreckt, und dass der Antriebsarm (14) über ein erstes, an einer festen Achse (15) angelenktes Ende, und ein entgegengesetztes zweites Ende verfügt, das an der gemeinsamen Achse (12) der oben genannten Stangen (7a, 7b) angelenkt ist.

6. Formvorrichtung nach Anspruch 4 oder 5, die in Form einer Karusselldrehformvorrichtung ausgebildet ist, sich entlang einer Drehrichtung (20) bewegt und die Teilungsebene (5) der Form (1) sich im Wesentlichen radial erstreckt, **dadurch gekennzeichnet, dass** es die in Drehrichtung (20) des Karussells betrachtet hintere Formhälfte ist, die einen Öffnungswinkel im Verhältnis zur Teilungsebene aufweist, der größer als der der anderen Formhälfte ist.

7. Formvorrichtung nach Anspruch 4 oder 5, die in Form einer Karusselldrehformvorrichtung ausgebildet ist, sich entlang einer Drehrichtung (20) bewegt und die Teilungsebene (5) der Form (1) sich im Wesentlichen radial erstreckt, **dadurch gekennzeichnet, dass** es die in Drehrichtung (20) des Karussells betrachtet vordere Formhälfte ist, die einen Öffnungswinkel im Verhältnis zur Teilungsebene aufweist, der größer als der der anderen Formhälfte ist.
